Europäisches Patentamt

European Patent Office

Office européen des brevets

(19)

(11) Numéro de publication: **0 240 438**
**A1**

## (12) DEMANDE DE BREVET EUROPEEN

(21) Numéro de dépôt: **87420059.5**

(22) Date de dépôt: **02.03.87**

(51) Int. Cl.⁴: **B 25 J 17/02**

(30) Priorité: **04.03.86 FR 8603192**

(43) Date de publication de la demande:
**07.10.87 Bulletin 87/41**

(84) Etats contractants désignés:
**BE CH DE ES GB IT LI SE**

(71) Demandeur: **S.A. DES ETABLISSEMENTS STAUBLI (France)**
**B.P. 20 183 Rue des Usines**
**F-74210 Faverges (FR)**

(72) Inventeur: **Palau, Joseph**
**Les Perris**
**F-74410 Duingt (FR)**

(74) Mandataire: **Monnier, Guy et al**
**Cabinet Monnier 150 Cours Lafayette B.P. 3058**
**F-69393 Lyon Cédex 03 (FR)**

(54) **Dispositif de poignet pour robot industriel.**

(57) La rotation du carter (11) et l'orientation de la broche (20) portée par ledit carter sont obtenues à l'aide d'une cloche dentée (24) et d'un pignon conique (13) emboîtes l'un dans l'autre dans un capot (5a) en porte-à-faux, ces deux organes dentés coopérant avec des pignons (14-25) prévus en bout des deux arbres concentriques (15 et 26).

1/1

## Description

L'invention a trait aux robots industriels destinés à la manutention et à l'usinage de pièces et elle vise plus particulièrement les dispositifs dits "de poignet" qui sont propres à animer la broche porte-outil ou porte-pièce, d'un déplacement angulaire suivant au moins deux orientations ou "axes" différents.

On sait que dans les agencements de ce type, le bâti du robot qui supporte le bras pourvu en bout de la broche tournante renferme deux moteurs indépendants dont chacun est associé à une chaîne cinématique distincte en vue d'assurer l'actionnement d'un élément rotatif autonome.

- Le premier élément rotatif est formé par un petit carter monté en bout du bras et propre à s'orienter suivant un axe perpendiculaire à celui dudit bras.

- Le deuxième élément rotatif est constitué par la broche porte-outil ou porte-pièce elle-même qui est déplacée angulairement suivant son axe, lequel est orienté transversalement à l'axe de pivotement du carter.

A ces deux moteurs indépendants est le plus souvent associé un troisième destiné à l'entraînement d'un élément rotatif constitué par le bras lui-même qui est apte à se déplacer angulairement suivant son axe longitudinal.

Les dispositifs d'actionnement qui sont connus à ce jour pour assurer ces trois fonctions sont complexes, lourds et encombrants et c'est à ces inconvénients que la présente invention entend principalement remédier.

Conformément à l'invention, les deux arbres concentriques qui à la manière usuelle traversent axialement le bras rotatif du robot pour assurer, l'un le déplacement angulaire du carter, l'autre celui de la broche porte-outil ou porte-pièce, coopèrent unilatéralement avec deux pignons coniques co-axiaux dont l'un, lié angulairement par un renvoi d'angle à la broche, est constitué sous la forme d'une cloche à denture conique de façon à renfermer celui qui est lié angulairement au carter pivotant qui porte la broche précitée.

On obtient de la sorte une construction très compacte, incorporant une chaîne cinématique double plus simple et plus fiable que celles des constructions classiques.

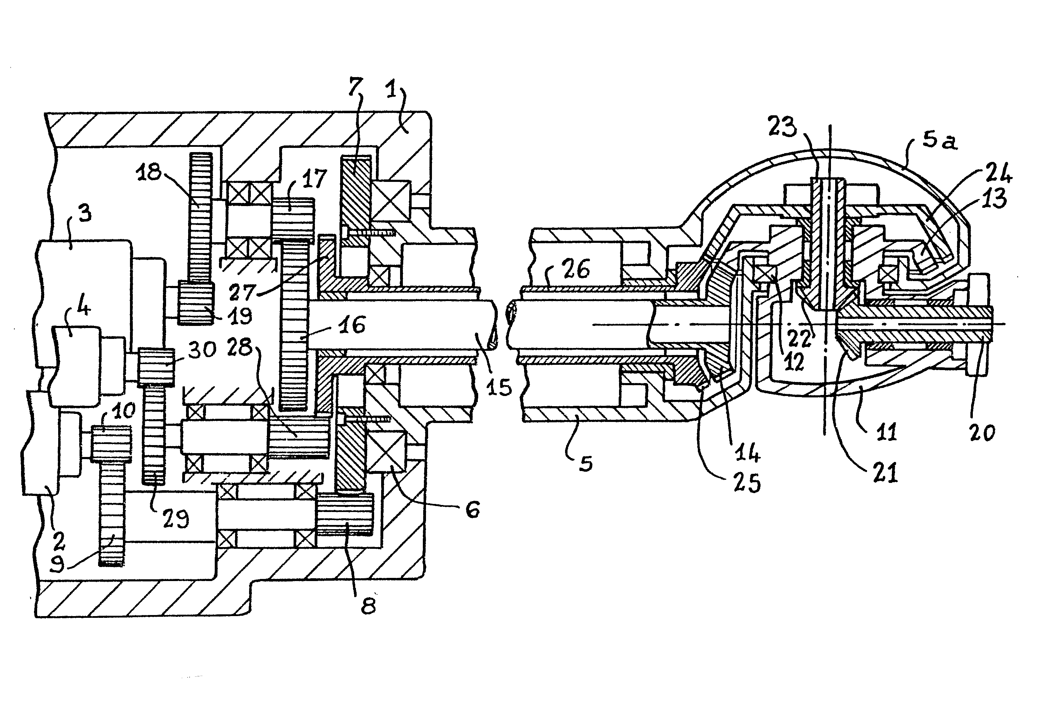

Le dessin annexé, donné à titre d'exemple, permettra de mieux comprendre l'invention, les caractéristiques qu'elle présente et les avantages qu'elle est susceptible de procurer :

La figure unique de ce dessin est une coupe axiale montrant de manière schématique l'agencement général d'un dispositif de poignet à trois axes établi conformément à l'invention.

Sur cette figure, la référence 1 désigne le bâti qui porte le bras du robot industriel envisagé et qui renferme à la manière usuelle les trois moteurs 2, 3, et 4 destinés à l'actionnement des trois éléments rotatifs dudit bras.

Le premier de ces éléments est le bras 5 lui-même, porté par le bâti 1 par l'intermédiaire d'un roulement tel que 6. L'extrémité de ce bras 5 est solidaire d'une roue dentée 7 qui à travers une série de pignons réducteurs 8, 9 et 10 est liée à l'arbre du moteur 2. Le bras 5 est ainsi susceptible d'être orienté suivant son axe longitudinal par rapport au bâti 1.

Le deuxième élément rotatif est constitué par un petit carter orientable 11 supporté par l'extrémité libre du bras 5 à travers un roulement 12. Au-dessus de ce dernier, le carter 11 est solidaire d'un large engrenage conique 13 qui engrène avec un engrenage correspondant 14 prévu à l'extrémité d'un arbre 15, lequel s'étend axialement à l'intérieur du bras 5. L'extrémité opposée de cet arbre 15 pénètre dans le bâti 1 pour porter une roue dentée 16 reliée, par un train d'engrenages réducteurs 17, 18 et 19, à l'arbre du moteur 3.

On conçoit dans ces conditions que ce moteur 3 permet la modification de l'orientation du carter 11 par rapport au bras 5 par pivotement suivant l'axe transversal défini par l'engrenage conique 13.

Le troisième élément rotatif du bras du robot est formé par la broche 20 destinée au déplacement angulaire de l'outil d'usinage ou de la pièce à travailler ou à monter. Cette broche 20 est portée à rotation par le carter 11 dans le prolongement axial des arbres 15 et 26 suivant un axe concentrique à celui dudit carter. L'extrémité de cette broche 20 disposée à l'intérieur de ce carter est reliée, par un renvoi d'angle 21-22, à un bout d'arbre 23 maintenu à rotation dans le moyeu de l'engrenage conique 13 sus-mentionné. Au-dessus de ce dernier le bout d'arbre 23, ainsi orienté perpendiculairement à la broche 20, est solidaire d'une cloche à denture conique 24, établie à un diamètre relativement grand de façon à venir coiffer l'engrenage 13 qui s'y emboîte.

Cette cloche dentée 24 coopère avec un engrenage conique 25 calé en bout d'un arbre tubulaire 26 concentrique à l'arbre 15 et au bras 5, lequel arbre 25 porte à l'opposé une roue dentée 27 disposée entre les roues 7 et 16 et reliée par un train d'engrenages réducteurs 28-29-30 à l'arbre du troisième moteur 4. Ce dernier assure en conséquence le déplacement angulaire de la broche 20 quelles que soient les orientations du bras 5 suivant son axe et du carter 11 suivant l'axe du bout d'arbre 23.

On observera que l'ensemble formé par la cloche dentée 24 et l'engrenage conique 13 est logé dans une sorte de capot 5a prévu en porte-à-faux à l'extrémité du bras 5, lequel capot recouvre le carter pivotant 11 et la broche 20 ; ce capot 5a, prévu sous forme unique par suite du montage particulier de la cloche 24 et de l'engrenage 13, comporte un poids faible par rapport aux capots doubles de la technique classique, et simplifie le montage et la maintenance du mécanisme. Les essais ont démontré que les performances de celui-ci étaient supérieures en couple et en précision, tout en étant de coût inférieur. L'ensemble est particulièrement compact et présente un encombrement remarquablement réduit qui facilite évidemment l'implantation et le fonctionnement du robot. On notera que la construction suivant l'invention écarte de l'extrémité libre du bras 5 tous les systèmes d'engrenages de réduction puisque ceux-ci sont logés dans le bâti ; le poids en porte-à-faux est ainsi réduit au minimum.

## Revendications

Dispositif de poignet pour robot industriele, du genre comprenant au moins deux moteurs indépendants reliés par des chaînes cinématiques distinctes l'un (3) à un petit carter (11) pour faire pivoter celui-ci suivant un axe orienté transversalement à celui du bras (5) du robot, et l'autre (4) à la broche tournante porte-outil ou porte-pièce (20) pour assurer le positionnement angulaire de celle-ci, les chaînes cinématiques associées à ces moteurs englobant deux arbres co-axiaux (15 et 26) montés concentriquement dans le bras (5) et reliés par deux renvois d'angle (13-14, 24-25) à roue et pignon coniques au pivot du carter (11) et à la broche (20), orientée dans le plan de l'axe du bras (5), caractérisé en ce que les deux roues coniques (13 et 24), établies à des diamètres différents, sont disposées unilatéralement par rapport à l'axe du bras (5), l'une (24) coiffant l'autre (13).

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | PATENT ABSTRACTS OF JAPAN, vol. 3, no. 130 (M-78), 27 octobre 1979, page 127 M 78; & JP-A-54 107 060 (TOKYO SHIBAURA DENKI K.K.) 22-08-1979 * Résumé * | 1 | B 25 J 17/02 |
| | --- | | |
| Y | FR-A-2 504 051 (FIRMA JUNGHEINRICH UNTERNEHMENSVERWALTUNG K.G.) * Revendication 1 * | 1 | |
| | --- | | |
| Y | DE-A-3 408 713 (MITSUBISHI DENKI K.K.) * Page 17, ligne 30 - page 18, ligne 20 * | 1 | |
| | --- | | |
| A | US-A-4 068 536 (STACKHOUSE) | | DOMAINES TECHNIQUES RECHERCHES (Int. Cl.4) |
| | ----- | | B 25 J |

Le présent rapport de recherche a été établi pour toutes les revendications

| Lieu de la recherche | Date d'achèvement de la recherche | Examinateur |
|---|---|---|
| LA HAYE | 05-06-1987 | LAMMINEUR P.C.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82